# EUROPÄISCHE PATENTSCHRIFT

(11) **EP 1 770 605 B1**
(45) Veröffentlichungstag und Bekanntmachung des Hinweises auf die Patenterteilung: **03.07.2013**
(21) Anmeldenummer: 06019980.9
(22) Anmeldetag: 25.09.2006
(51) Int. Cl.: G06K 19/07, G06K 19/077, G06K 19/073

(54) **Tragbarer Datenträger und Verfahren zum Betreiben eines tragbaren Datenträgers**
Portable data carrier and method for operating a portable data carrier
Support de données portatif et procédé destiné au fonctionnement d'un support de données portatif

(30) Priorität: 28.09.2005 DE 102005046352; 22.09.2006 DE 102006044881
(43) Veröffentlichungstag der Anmeldung: 04.04.2007
(73) Patentinhaber: Giesecke & Devrient GmbH, 81677 München (DE)
(72) Erfinder: Kluge, Stefan, 80997 München (DE); Finkenzeller, Klaus, 85774 Unterföhring (DE)

(56) Entgegenhaltungen:
- WO-A-00/27137
- WO-A-01/54048
- WO-A-98/43218
- US-B1- 6 386 459

## Beschreibung

Die Erfindung betrifft einen tragbaren Datenträger und ein Verfahren zum Betreiben eines tragbaren Datenträgers.

Bei einer Reihe von Anwendungen sind kontaktlos betreibbare tragbare Datenträger (im folgenden auch als kontaktlose Datenträger bezeichnet) insbesondere hinsichtlich der Handhabung kontaktbehaftet betreibbaren tragbaren Datenträgern (im folgenden auch als kontaktbehaftete Datenträger bezeichnet) vorzuziehen. Allerdings ist es bei kontaktlosen Datenträgern zum Teil schwierig, einen ausreichenden Schutz gegen potentielle Angriffe zu gewährleisten. Anders als bei einem kontaktbehafteten Datenträger ist ein kontaktloser Datenträger nicht nur dann betriebsbereit, wenn er in ein dafür vorgesehenes Lesegerät eingeführt und von diesem berührend kontaktiert wird, sondern kann prinzipiell zu jeder Zeit an einem beliebigen Ort in Betrieb genommen werden. Voraussetzung ist lediglich, dass am Ort des kontaktlosen Datenträgers ein geeignetes Feld ausreichender Feldstärke für einen Betrieb und eine Kommunikation des kontaktlosen Datenträgers vorhanden ist.

Dies bringt erhebliche Probleme hinsichtlich der Kontrolle des kontaktlosen Datenträgers durch den Benutzer mit sich. Bei einem kontaktbehafteten Datenträger kann sich der Benutzer sicher sein, dass dieser außer Betrieb ist, wenn er ihn lediglich in seiner Brieftasche mit sich führt und ihn nicht in ein Lesegerät steckt. Dies ist bei einem kontaktlosen Datenträger nicht der Fall. Wenn im Bereich der Brieftasche des Benutzers eine ausreichend hohe Feldstärke vorliegt, wird der kontaktlose Datenträger auch dann in Betrieb genommen, wenn dies vom Benutzer nicht gewünscht ist. In der Regel hat der Benutzer noch nicht einmal die Möglichkeit, herauszufinden, ob der kontaktlose Datenträger gerade in Betrieb ist und womöglich gerade eine Transaktion durchführt.

Somit besteht das Risiko, dass ein Angreifer den tragbaren Datenträger durch Erzeugung eines geeigneten Felds gegen den Willen und ohne Kenntnis des rechtmäßigen Benutzers in Betrieb nimmt. Auf diese Weise könnte beispielsweise ein als Ausweisdokument ausgebildeter kontaktloser Datenträger unberechtigter Weise ausgelesen werden oder es könnte ein Geldbetrag von einem als elektronische Börse ausgebildeten kontaktlosen Datenträger abgebucht werden. Ein derartiger Missbrauch kann zwar sehr leicht dadurch verhindert werden, dass für die Nutzung des kontaktlosen Datenträgers die Eingabe einer persönlichen Geheimzahl (PIN) an dem jeweiligen Lesegerät erforderlich ist. Dies würde aber die Handhabungsvorteile des kontaktlosen Datenträgers wieder weitgehend zunichte machen.

Es ist denkbar, den kontaktlosen Datenträger mit einem Taster auszurüsten, der im unbetätigten Zustand eine für die kontaktlose Datenübertragung vorgesehene Antennenspule unterbricht. Somit ist der kontaktlose Datenträger lediglich während einer Betätigung des Tasters betriebsbereit. Diese Lösung ist zwar im Hinblick auf ihre Handhabbarkeit nicht zu beanstanden, bietet allerdings nur einen begrenzten Schutz vor Missbrauch. Durch die am Taster auftretende Streukapazität kommt es nämlich zu einem gewissen Übersprechen, so dass bei nicht betätigtem Taster die Lesereichweite zwar stark reduziert ist, der kontaktlose Datenträger aber nicht funktionsunfähig ist. Durch eine Erhöhung der Feldstärke im Bereich des kontaktlosen Datenträgers mittels eines leistungsfähigen Senders kann die Lesereichweite wieder erhöht werden, so dass trotz der unterbrochenen Antennenspule eine unberechtigte Inbetriebnahme des kontaktlosen Datenträgers möglich ist.

Aus der DE 197 21057 A1 ist ein faltbarer kartenförmiger Datenträger bekannt, der Spulen zur drahtlosen Datenübertragung aufweist. Bei einer Variante des Datenträgers sind die Spulen so angeordnet, dass sich im aufgeklappten Zustand des Datenträgers die in den Spulen erzeugten Spannungen aufheben und der Datenträger somit nur im geschlossenen Zustand betriebsbereit ist. Bei einer weiteren Variante des Datenträgers heben sich die Spannungen der Spulen im geschlossenen Zustand des Datenträgers auf, so dass der Datenträger nur im aufgeklappten Zustand betriebsbereit ist. Eine faltbare Ausbildung eines kontaktlosen Datenträgers erfordert allerdings einen vergleichsweise großen Herstellungsaufwand.

In der US 6,386,459 B1 und in der US 2002/ 01903641 A1 wird vorgeschlagen, die beiden Anschlüsse, mittels der der Chip an eine spulenförmige Antenne angeschlossen ist, kurzzuschließen. Dadurch wird ein in der Spule reduzierter Strom am Chip vorbeigeleitet. Die Kurzschlussverbindung kann gemäß US 2002/ 01903641 A1 selbst als Spule, jedoch mit entgegengerichteter Wicklungsrichtung, ausgebildet sein, so dass die in den Spulen induzierten Ströme nicht nur an dem Chip vorbei zurück zur jeweils anderen Spule geleitet werden, sondern sich vorzugsweise gegenseitig aufheben. Die Kurzschlussverbindung verläuft dabei in einem Randbereich der Karte, der zur Aktivierung der Karte aus der Karte herausgebrochen wird, um die Kurzschlussverbindung zu unterbrechen. Alternativ können gemäß US 6,386,459 B1 einzelne Windungen der Antennenspule über elektrisch leitende Stege kurzgeschlossen sein, die zur Aktivierung der Karte aus der Karte herausgebrochen werden. Im nicht aktivierten Zustand hat die Karte dann allerdings noch eine beschränkte Reichweite.

Im Zusammenhang mit einer irreversiblen Deaktivierung sind zwei Hauptverfahrensgruppen bekannt, logische und physikalische Verfahren. Ein logisches Verfahren ist z. B. das Übertragen eines speziellen "Kill-Kommandos" an den Transponder. Der Transponder speichert daraufhin einen internen Zustand "killed" dauerhaft ab und reagiert zukünftig nicht mehr auf Kommandos eines Lesegeräts. Bei den physikalischen Verfahren sind zahlreiche Möglichkeiten bekannt, einen Transponder dauerhaft funktionsunfähig zu machen. So können etwa der Chip oder auch die Antenne mechanisch zerstört werden. Besonders zur mechanischen Zerstörung der Antenne sind zahlreiche Methoden bekannt. So können etwa die Anschlussleitungen unterbrochen oder die Antenne an einer dafür vorgesehenen Perforation vollständig abgetrennt werden.

Die WO 98/43218 A offenbart einen tragbaren Datenträger mit mehreren Antenneneinrichtungen zur kontaktlosen Energie- und Datenübertragung. Mithilfe eines Schalters ist es möglich, zwei der Antenneneinrichtungen derart in Serie zu schalten, so dass sich ihre Wirkungen aufheben.

Der Erfindung liegt die Aufgabe zugrunde, den Beitrag zur Wirkung der Antennenanordnung eines kontaktlos betreibbaren tragbaren Datenträgers mithilfe desselben Elements zu verringern oder zu erhöhen.

Diese Aufgabe wird durch einen tragbaren Datenträger mit der Merkmalskombination des Anspruchs 1 und ein Verfahren mit der Merkmalskombination des Anspruchs 29 gelöst. Vorteilhafte Weiterbildungen der Erfindung werden in den Unteransprüchen beschrieben.

Der erfindungsgemäße tragbare Datenträger weist eine elektronische Schaltung zur Speicherung und/oder Verarbeitung von Daten und eine Antennenanordnung mit mehreren Antenneneinrichtungen zur kontaktlosen Energie- und/oder Datenübertragung auf. Weiterhin weist der erfindungsgemäße Datenträger eine Schalteinrichtung auf, mittels welcher der Beitrag wenigstens einer der Antenneneinrichtungen zur Wirkung der Antennenanordnung variierbar ist. Dabei sind zumindest in einem Schaltzustand mindestens zwei Antenneneinrichtungen bezogen auf die elektronische Schaltung in Serie geschaltet und ihre Beiträge zur Wirkung der Antennenanordnung einander entgegengesetzt. Ausserdem ist vorgesehen, dass der Beitrag wenigstens einer der Antenneneinrichtungen zur Wirkung der Antennenanordnung so variierbar ist, dass sich die Beiträge der Antenneneinrichtungen im aktiven Zustand des Datenträgers verstärkend überlagern.

Bei einem Ausführungsbeispiel des tragbaren Datenträgers sind die Anschlüsse wenigstens einer der Antenneneinrichtungen vertauschbar. Dadurch lässt sich der Beitrag dieser Antenneneinrichtung sehr stark variieren.

In einem bevorzugten Ausführungsbeispiel des tragbaren Datenträgers ist der Beitrag wenigstens einer der Antenneneinrichtungen zur Wirkung der Antennenanordnung reduzierbar. Insbesondere kann wenigstens eine der Antenneneinrichtungen kurzschließbar sein. Besonders vorteilhaft ist es, wenn der Beitrag wenigstens einer der Antenneneinrichtungen zur Wirkung der Antennenanordnung so variierbar ist, dass sich die Beiträge der Antenneneinrichtungen im deaktivierten Zustand des Datenträgers kompensieren. In diesem Fall verbleibt keine eingeschränkte Wirksamkeit der Antennenanordnung, über die evtl. doch noch ein Zugriff möglich wäre.

Der tragbare Datenträger kann so ausgebildet sein, dass wenigstens zwei der Antenneneinrichtungen gleiche Induktivitätswerte aufweisen. Dadurch ist eine Kompensation der Beiträge der Antenneneinrichtungen sehr einfach möglich. Zusätzlich oder alternativ dazu können wenigstens zwei der Antenneneinrichtungen unterschiedliche Induktivitätswerte aufweisen. Weiterhin können wenigstens zwei der Antenneneinrichtungen eine unterschiedliche Dämpfung aufweisen. Auf diese Weise lässt sich eine unerwünschte gegenseitige Beeinflussung der Antenneneinrichtungen reduzieren.

In einer vorteilhaften Ausgestaltung weist die Antennenanordnung wenigstens drei Antenneneinrichtungen auf. Eine derartige Antennenanordnung lässt einen relativ großen Gestaltungsspielraum zu, so dass insbesondere auch Anpassungen an spezielle Anwendungsfälle möglich sind.

Die Schalteinrichtung kann wenigstens einer der Antenneneinrichtungen parallel geschaltet sein. Bei dieser Ausgestaltung lässt sich der Beitrag dieser Antenneneinrichtung durch Kurzschließen mittels der Schalteinrichtung stark variieren.

Die Schalteinrichtung ist bevorzugt als ein Taster ausgebildet. Dadurch ist gewährleistet, dass im unbetätigten Zustand der Schalteinrichtung stets der gleiche Schaltzustand vorliegt und es kann beispielsweise verhindert werden, dass der tragbare Datenträger durch eine einmalige versehentliche Betätigung der Schalteinrichtung für einen langen Zeitraum unerwünscht und unbemerkt in Betrieb ist. Insbesondere ist die Schalteinrichtung in Ruhestellung geöffnet. Dadurch lässt sich ein hohes Sicherheitsniveau erreichen, da beispielsweise bei Kontaktproblemen automatisch die Ruhestellung vorliegt. Beispielsweise ist die Schalteinrichtung als ein Polwendetaster ausgebildet oder es wird die Funktion eines Polwendetasters durch mehrere Schalteinrichtungen nachgebildet.

Zur dauerhaften Aktivierung oder Deaktivierung kann die Schalteinrichtung bzw. der Taster irreversibel betätigbar sein. Insbesondere für die irreversible Deaktivierung sieht ein bevorzugtes Ausführungsbeispiel des tragbaren Datenträgers einen von dem Datenträger trennbaren Teil der Schalteinrichtung vor, der eine vorgegebene Trennlinie definiert, um durch Abtrennen des Teils vom Datenträger die Schalteinrichtung in vorhersehbarer Weise zu betätigen. Der abtrennbare Teil kann z. B. ein Folienstück sein, über das oder in dem ein Abschnitt der Antennenanordnung verläuft, so dass dieser Abschnitt beim Entfernen der Folie mit entfernt wird. Dadurch wird die Antennenanordnung in einen anderen Zustand versetzt, was im Sinne der Erfindung als ein Schaltvorgang zu verstehen ist. Die Trennlinie kann auch als Sollbruchlinie in der Folie oder im Datenträger ausgebildet sein, also als eine Linie, die zumindest in Teilbereichen eine Perforierung und/oder vorzugsweise eine Wandstärkenreduzierung umfasst. Der abzutrennende Teil kann dann aus der Folie bzw. aus dem Datenträger entlang der Sollbruchlinie ausgebrochen werden. Die durch eine reduzierte Wandstärke gekennzeichnete Sollbruchlinie lässt sich vorteilhaft mittels des so genannten Kiss-Cutting-Verfahrens im Stanzvorgang erzeugen.

Es ist im Rahmen der vorliegenden Erfindung auch möglich, mehr als eine Schalteinrichtung vorzusehen, nämlich z. B. eine erste Schalteinrichtung zum zeitweisen Deaktivieren/ Aktivieren der Antennenanordnung und/ oder eine zweite Schalteinrichtung zum irreversiblen Deaktivieren, z. B. zum endgültigen Unbrauchbarmachen der Antennenanordnung, und/oder eine dritte Schalteinrichtung zum irreversiblen Aktivieren, z. B. zum erstmaligen Freischalten des Datenträgers.

Der tragbare Datenträger ist vorzugsweise so realisiert, dass wenigstens eine der Antenneneinrichtungen als eine Antennenspule ausgebildet ist. Insbesondere sind wenigstens zwei der Antenneneinrichtungen als Antennenspulen ausgebildet, die wenigstens zeitweise mit einem entgegengesetzten Wickelsinn in Serie geschaltet sind. Auf diese Weise kann zum Beispiel eine Kompensation der Beiträge der einzelnen Antennenspulen erreicht werden. Bevorzugt ist der tragbare Datenträger als eine Chipkarte ausgebildet.

Die Erfindung bezieht sich weiterhin auf ein Verfahren zum Betreiben eines tragbaren Datenträgers, der eine elektronische Schaltung zur Speicherung und/oder Verarbeitung von Daten und eine Antennenanordnung mit mehreren Antenneneinrichtungen zur kontaktlosen Energie- und/ oder Datenübertragung aufweist. Beim erfindungsgemäßen Verfahren wird der Beitrag wenigstens einer der Antenneneinrichtungen zur Wirkung der Antennenanordnung mittels einer Schalteinrichtung variiert, wobei zumindest in einem Schaltzustand die Beiträge von mindestens zwei der Antenneneinrichtungen zur Wirkung der Antennenanordnung einander entgegengesetzt sind. Der tragbare Datenträger wird dadurch zwischen einem Zustand, in dem eine Energie- und/oder Datenübertragung über die Antennenanordnung durchgeführt wird, und einem Zustand, in dem keine Energie- und/ oder Datenübertragung über die Antennenanordnung durchgeführt wird, überführt.

Die Erfindung wird nachstehend anhand der in der Zeichnung dargestellten Ausführungsbeispiele erläutert, bei denen der tragbare Datenträger jeweils als eine Chipkarte ausgebildet ist. Die Erfindung ist allerdings nicht auf Chipkarten beschränkt, sondern bezieht sich gleichermaßen auch auf andere tragbare Datenträger, z. B. Visa-Sticker für Personalausweise. Dabei ist als ein tragbarer Datenträger im Sinn der Erfindung ein Rechnersystem anzusehen, bei dem die Ressourcen, d.h. Speicherressourcen und/oder Rechenkapazität (Rechenleistung) begrenzt sind, z.B. eine Chipkarte (Smart Card, Mikroprozessor-Chipkarte) oder ein Token oder ein Chipmodul zum Einbau in eine Chipkarte oder in ein Token. Der tragbare Datenträger hat einen Körper, in dem beispielsweise eine CPU (ein Mikroprozessor) angeordnet ist, und der jede beliebige standardisierte oder nicht standardisierte Gestalt haben kann, beispielsweise die Gestalt einer flachen Chipkarte ohne Norm oder nach einer Norm wie z.B. ISO 7810 (z.B. ID-1, ID-00, ID-000) oder die eines volumigen Tokens. Der tragbare Datenträger weist eine Schnittstelle für eine kontaktlose Kommunikation mit einem Lesegerät und gegebenenfalls zusätzlich eine Schnittstelle für eine kontaktbehaftete Kommunikation auf.

Es zeigen:
- Fig. 1: ein erstes Beispiel einer Chipkarte gemäß dem Stand der Technik in einer schematischen Aufsicht,
- Fig. 2: ein Ersatzschaltbild des in Fig. 1 dargestellten Beispiels der Chipkarte,
- Fig. 3: die in Fig. 2 dargestellte Schaltungsanordnung mit geschlossenem Taster,
- Fig. 4: die in Fig. 2 dargestellte Schaltungsanordnung mit zusätzlichen Schaltungsdetails,
- Fig. 5: eine mögliche Realisierung der einen Antennenspule für die in Fig. 4 dargestellte Schaltungsanordnung in Aufsicht,
- Fig. 6: eine mögliche Realisierung der anderen Antennenspule für die in Fig. 4 dargestellte Schaltungsanordnung in Aufsicht,
- Fig. 7: ein Ersatzschaltbild eines erstem Ausführungsbeispiels der Chipkarte,
- Fig. 8: ein Ersatzschaltbild für eine Abwandlung des ersten Ausführungsbeispiels der Chipkarte,
- Fig. 9: ein Ersatzschaltbild für eine weitere Abwandlung des ersten Ausführungsbeispiels der Chipkarte,
- Fig.10: ein Ersatzschaltbild eines zweiten Ausführungsbeispiels der Chipkarte,
- Fig.11: ein Ersatzschaltbild für eine Abwandlung des zweiten Ausführungsbeispiels der Chipkarte,
- Fig. 12: ein Ersatzschaltbild für eine Mischform zwischen dem ersten und dem zweiten Ausführungsbeispiel der Chipkarte,
- Fig. 13: ein Ersatzschaltbild eines dritten Ausführungsbeispiels ähnlich der Schaltungsanordnung gemäß Fig. 4,
- Fig. 14: einen Visa-Sticker schematisch in Draufsicht mit einer Schaltungsanordnung gemäß dem Ersatzschaltbild nach Fig. 13,
- Fig. 15: den Visa-Sticker aus Fig. 14 im Querschnitt entlang der Linie AB,
- Fig. 16: eine Chipkarte mit einer Schaltungsanordnung gemäß dem dritten Ausführungsbeispiel nach Fig. 13,
- Fig. 17: eine Weiterbildung des dritten Ausführungsbeispiels gemäß Fig. 14 und 15 schematisch in Draufsicht und
- Fig. 18: die Weiterbildung aus Fig. 17 im Querschnitt entlang Linie A-B.

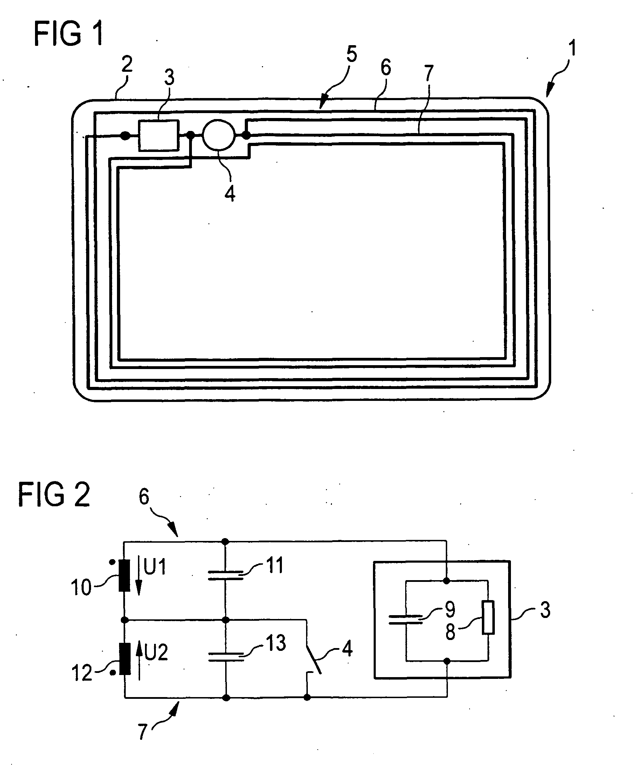

Fig.1 zeigt ein erstes Beispiel einer Chipkarte 1 gemäß dem Stand der Technik in einer schematischen Aufsicht, wobei auch im Inneren der Chipkarte 1 angeordnete Komponenten dargestellt sind. Die Chipkarte 1 weist einen Kartenkörper 2 auf, in den ein integrierter Schaltkreis 3, ein Taster 4 und eine Antennenanordnung 5 eingebettet sind. Der Kartenkörper 2 kann beispielsweise durch Lamination mehrerer Kunststofffolien hergestellt werden. Die Antennenanordnung 5 weist eine Antennenspule 6 und eine Antennenspule 7 auf, wobei die Antennenspule 7 innerhalb der Antennenspule 6 angeordnet ist. Die Antennenspulen 6 und 7 besitzen die gleichen Induktivitätswerte und sind mit entgegen gesetztem Wickelsinn in Serie geschaltet. Die Antennenspulen 6 und 7 können beispielsweise drucktechnisch hergestellt werden, indem eine Silberleitpaste oder ein anderes elektrisch leitfähiges Material auf wenigstens eine Kunststofffolie des Kartenkörpers 2 aufgedruckt wird, z. B. im Siebdruckverfahren. Alternativ können die Antennenspulen durch ein Ätzverfahren, z. B. durch Ätzen und Belichten einer Kupfer-beschichteten Folie, durch das Aufbringen und Metallisieren von Waschfarben oder durch ein ähnliches Verfahren erzeugt werden.

Nicht dargestellt ist die Variante, nach der die Antennenspulen 6 und 7 im wesentlichen deckungsgleich auf Vorder- und Rückseite einer Kunststofffolie aufgebracht werden. Es ist weiterhin denkbar, die Antennenspulen 6 und 7 elektrisch voneinander isoliert auf zwei verschiedenen zu laminierenden Schichten anzuordnen und geeignet miteinander zu verschalten.

Die Antennenanordnung 5 ist derart an den integrierten Schaltkreis 3 angeschlossen, dass ein Anschluss des integrierten Schaltkreises 3 mit der Antennenspule 6 und ein weiterer Anschluss des integrierten Schaltkreises 3 mit der Antennenspule 7 verbunden sind. Der Taster 4 ist der Antennenspule 7 parallel geschaltet. Im unbetätigten Zustand des Tasters 4, der auch dessen Ruhezustand darstellt, ist der Taster 4 geöffnet. In betätigtem Zustand ist der Taster 4 geschlossen. Das bedeutet, dass die Antennenspule 7 im betätigten Zustand des Tasters 4 kurzgeschlossen ist. Der ünbetätigte Zustand des Tasters 4 wird im folgenden auch als geöffneter Zustand und der betätigte Zustand als geschlossener Zustand bezeichnet.

Die Antennenanordnung 5 kann der kontaktlosen Übertragung von Energie von einem nicht figürlich dargestellten und für sich bekannten Lesegerät zum integrierten Schaltkreis 3 dienen. Alternativ dazu oder zusätzlich kann über die Antennenanordnung 5 eine kontaktlose Datenübertragung zwischen dem Lesegerät und dem integrierten Schaltkreis 3 durchgeführt werden. Die kontaktlose Übertragung von Energie und Daten kann insbesondere mittels eines magnetischen Wechselfelds erfolgen, das vom Lesegerät erzeugt wird und beispielsweise eine Frequenz von 13,56 MHz aufweist.

Wie anhand von Fig. 2 noch näher beschrieben wird, heben sich im geöffneten Zustand des Tasters 4 die Wirkungen der Antennenspule 6 und 7 wegen des entgegengesetzten Wickelsinns auf. Über die Antennenanordnung 5 kann somit weder eine Energieübertragung noch eine Datenübertragung durchgeführt werden. Wenn der Taster 4 geschlossen und dadurch die Antennenspule 7 kurzgeschlossen wird, wird die Wirkung der Antennenspule 6 nicht mehr durch die Antennenspule 7 kompensiert. Über die Antennenspule 6 kann somit die Energieübertragung und die Datenübertragung abgewickelt werden.

Ein Benutzer der Chipkarte 1 kann sich somit sicher sein, dass im unbetätigten Zustand des Tasters 4 eine Kommunikation mit der Chipkarte 1 nicht möglich ist und kann die Kommunikation durch eine Betätigung des Tasters 4 bewusst ermöglichen. Beispielsweise können ohne den Willen des Benutzers keine Daten aus dem integrierten Schaltkreis 3 ausgelesen werden und auch keine Transaktionen oder sonstigen Abläufe auf Basis einer im integrierten Schaltkreis 3 implementierten Anwendung durchgeführt werden.

Fig. 2 zeigt ein Ersatzschaltbild des in Fig.1 dargestellten Beispiels der Chipkarte 1. Analog zur Fig.1 sind in Fig. 2 der integrierte Schaltkreis 3, die daran angeschlossene Serienschaltung aus den Antennenspulen 6 und 7 sowie der zur Antennenspule 7 parallel geschaltete Taster 4 dargestellt. Zusätzlich zeigt Fig. 2 noch weitere Schaltungsdetails.

Zur Veranschaulichung der Leistungsaufnahme des integrierten Schaltkreises 3 ist in diesen ein ohmscher Widerstand 8 eingezeichnet. Weiterhin ist die Eingangskapazität des integrierten Schaltkreises 3 als ein zum Widerstand 8 parallel geschalteter Kondensator 9 dargestellt. Außerdem sind für die Antennenspulen 6 und 7 jeweils die Ersatzschaltbilder dargestellt. Dies gilt auch für die weiteren Fig., in denen Ersatzschaltbilder der Chipkarte 1 dargestellt sind. Als Ersatzschaltbild für die Antennenspule 6 ist eine Parallelschaltung aus einer reinen Induktivität 10 und einer parasitären Kapazität 11 eingezeichnet. Entsprechend zeigt das Ersatzschaltbild für die Antennenspule 7 eine Parallelschaltung aus einer reinen Induktivität 12 und einer parasitären Kapazität 13. Die Kapazitäten 11 und 13 weisen typischer Weise Werte bis zu einigen zehn pF auf. Neben den Induktivitäten 10 und 12 sowie den Kapazitäten 11 und 13 weisen die Antennenspulen 6 und 7 auch ohmsche Widerstände auf, die allerdings in Fig. 2 nicht eingezeichnet sind. Durch einen Punkt ist jeweils der Wickelsinn der Antennenspulen 6 und 7 dargestellt.

Wie in Fig. 1 sind die Antennenspulen 6 und 7 somit auch bei der Darstellung der Fig. 2 mit entgegengesetztem Wickelsinn in Serie geschaltet.

Wenn die in Fig. 2 dargestellte Schaltungsanordnung einem magnetischen Wechselfeld ausgesetzt wird, das beispielsweise durch ein Lesegerät erzeugt wird, wird in der Antennenspule 6 eine Spannung U1 induziert. Da sich der Taster 4 im geöffneten Zustand befindet, hat er keinen Einfluss auf die Antennenspule 7, so dass in der Antennenspule 7 eine Spannung U2 induziert wird. Wie durch die Pfeile angedeutet, sind die Spannungen U1 und U2 infolge des entgegengesetzten Wickelsinns der Antennenspulen 6 und 7 zueinander entgegengesetzt. Da die beiden Antennenspulen 6 und 7 gleich große Induktivitäten 10 und 12 aufweisen, sind die Spannungen U1 und U2 betragsmäßig gleich und heben sich somit in der Serienschaltung gerade auf, d. h. am integrierten Schaltkreis 3 liegt keine Spannung an. Somit ist der integrierte Schaltkreis 3 bei geöffnetem Taster 4 mangels Versorgungsspannung außer Betrieb. Daran ändert sich auch nichts bei einer Erhöhung der Feldstärke, der die Chipkarte 1 ausgesetzt ist. Eine Erhöhung der Feldstärke hat zwar einen Anstieg der Spannungen U1 und U2 zur Folge. Da aber beide Spannungen U1 und U2 gleichermaßen ansteigen, heben sie sich auch bei einer höheren Feldstärke weiterhin gegenseitig auf. Dies gilt insbesondere für den Fall, dass die Antennenspulen 6 und 7 eine im wesentlichen gleiche Geometrie aufweisen, da selbst inhomogene Felder zu einer betragsgleichen Veränderung der Spannungen U1 und U2 führen, die sich in der Summe aufheben. Es ist daher vorteilhaft, die Antennenspulen 6 und 7 möglichst deckungsgleich in dem Kartenkörper anzuordnen.

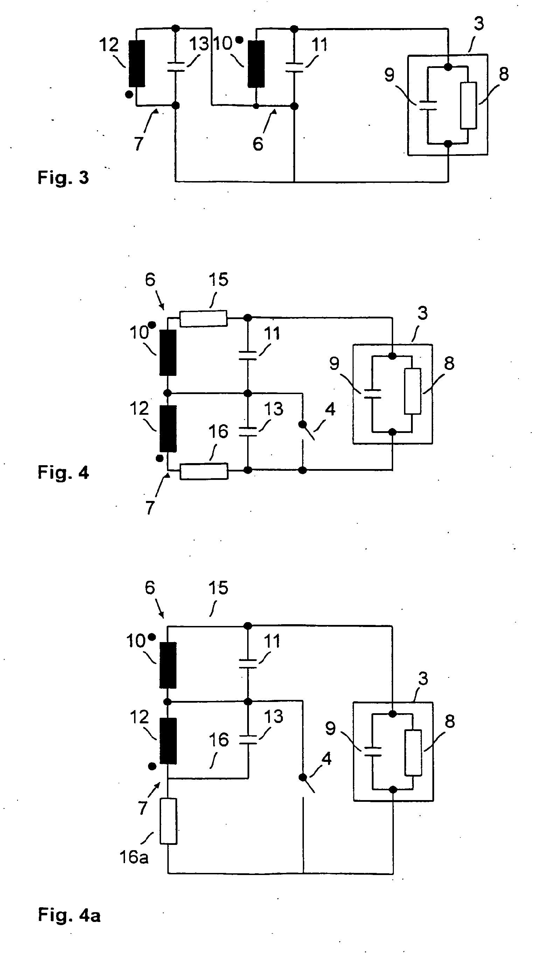

Wird der Taster 4 geschlossen, so wird die Antennenspule 7 kurzgeschlossen, so dass die Spannung U2 gleich Null ist. Dies bedeutet, dass die Spannung U1 nicht mehr durch die Spannung U2 kompensiert wird und deshalb in voller Höhe am integrierten Schaltkreis 3 anliegt. Somit wird der integrierte Schaltkreis 3 ab sofort mit der Spannung U1 versorgt und geht in Betrieb. Im Rahmen dieses Betriebs kann der integrierte Schaltkreis 3 Daten über die Antennenspule 6 senden und empfangen. Um die Energieversorgung und die Datenübertragung über die Antennenspule 6 zu ermöglichen, ist diese so dimensioniert, dass sie bei der vorgesehenen Betriebsfrequenz optimale Übertragungseigenschaften aufweist. Näheres hierzu wird anhand von Fig. 3 erläutert.

Fig. 3 zeigt die in Fig. 2 dargestellte Schaltungsanordnung mit geschlossenem Taster 4. Zur Verdeutlichung der Eigenschaften der Schaltungsanordnung ist nicht der Taster 4 selbst, sondern ein Ersatzschaltbild für den Taster 4 dargestellt. Dieses Ersatzschaltbild besteht darin, dass die Antennenspule 6 mit ihren beiden Enden direkt mit dem integrierten Schaltkreis 3 verbunden, die Antennenspule 7 kurzgeschlossen und mit der ersten Antennenspule 6 induktiv verkoppelt ist. Dies bedeutet, dass die kurzgeschlossene Antennenspule 7, die wegen des Kurzschlusses eine sehr hohe Resonanzfrequenz aufweist, den Schwingkreis der ersten Antennenspule 6 mit dem integrierten Schaltkreis 3 lediglich etwas verstimmt. Diese Verstimmung wird bei der Dimensionierung der Antennenspule 6 berücksichtigt. Eine weitere Optimierung der Schaltungsanordnung bzgl. der Antennenspulen 6 und 7 wird anhand von Fig. 4 erläutert.

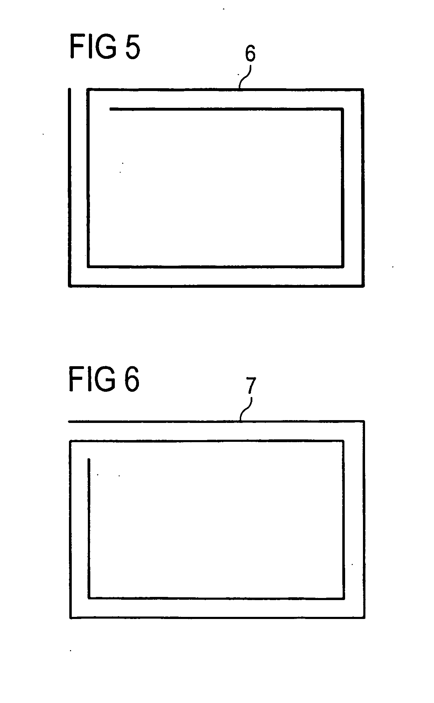

Fig. 4 zeigt die in Fig. 2 dargestellte Schaltungsanordnung mit zusätzlichen Schaltungsdetails. Bei den zusätzlichen Schaltungsdetails handelt es sich um einen ohmschen Widerstand 15 der Antennenspule 6 und um einen ohmschen Widerstand 16 der Antennenspule 7. Der Widerstand 15 ist zwischen die Induktivität 10 und die Kapazität 11, der Widerstand 16 zwischen die Induktivität 12 und die Kapazität 13 eingezeichnet. Dabei sind die Antennenspulen 6 und 7 so ausgebildet, dass der Widerstand 16 einen deutlich höheren Wert als der Widerstand 15 aufweist. Dadurch wird erreicht, dass bei geschlossenem Taster 4 die kurzgeschlossene Antennenspule 7 durch den großen Widerstand 16 relativ stark bedämpft wird und somit die Antennenspule 6 weniger beeinflusst als ohne diese Bedämpfung. Wie die beiden Antennenspulen 6 und 7 mit unterschiedlichen Widerständen 15 und 16 realisiert werden können und welche Auswirkungen dies im einzelnen hat, wird anhand von Fig. 5 und 6 erläutert.

Fig. 5 zeigt eine mögliche Realisierung der Antennenspule 6 für die in Fig. 4 dargestellte Schaltungsanordnung in Aufsicht. Fig. 6 zeigt eine entsprechende Aufsicht auf eine mögliche Realisierung der Antennenspule 7. Abgesehen vom entgegengesetzten Wickelsinn unterscheiden sich die Realisierungen der beiden Antennenspulen 6 und 7 insbesondere hinsichtlich der Breite der beispielsweise drucktechnisch hergestellten Leiterbahnen, durch welche die Antennenspulen 6 und 7 ausgebildet werden. Die Antennenspule 6 weist vergleichsweise breite Leiterbahnen auf, so dass der Widerstand 15 einen vergleichsweise kleinen Wert besitzt. Die Antennenspule 7 weist dagegen sehr dünne Leiterbahnen und somit einen großen Widerstand 16 auf. Die dünnen Leiterbahnen der Antennenspule 7 führen auch dazu, dass Material, beispielsweise Silberleitpaste, für die Ausbildung der Leiterbahnen eingespart wird.

Nach einer weiteren, in Fig. 4a dargestellten Ausgestaltung kann die vorstehend beschriebene Dämpfung der Antennenspule 7 auch durch einen zusätzlichen vorgeschalteten Dämpfungswiderstand 16a erzielt werden. Die Widerstandswerte liegen dabei typischerweise in einem Bereich von wenigen Ohm bis hin zu einigen zehntausend Ohm. Ein Vorteil dieser Variante besteht darin, dass die beiden Antennenspulen 6 und 7 bezüglich ihrer Geometrie weitgehend symmetrisch aufgebaut sein können.

Gemäß einer weiteren, nicht dargestellten Variante können die Antennenspulen auch gleichsinnig gewickelt, aber gegensinnig verschaltet sein. Denkbar sind ferner unterschiedliche Querschnittsgeometrien der jeweiligen Antennenspulen 6 bzw. 7, die beispielsweise durch einen mehrfachen Druckvorgang des leitenden Materials ausgebildet werden können. Auf diese Weise läßt sich die gedruckte Leiterbahn mehr oder weniger erhaben realisieren und somit der elektrische Widerstand 15 bzw. 16 variieren.

Zum Einsatz kommen können je nach Anwendungsgebiet und Ausgestaltung auch unterschiedliche Materialien, wie Silberleitpaste mit unterschiedlichem Silberanteil oder Graphitpaste als ein Beispiel eines hochohmigen Materials.

Die Kompensation der beiden Spannungen U1 und U2 bei geöffnetem Taster 4 wird durch die unterschiedlich großen Widerstände 15 und 16 nicht gestört, da bei geöffnetem Taster 4 wegen der entgegengesetzt gleichen Spannungen U1 und U2 kein Strom fließt. Allerdings hängen die Induktivitäten 10 und 12 der in den Fig. 5 und 6 dargestellten Antennenspulen 6 und 7 auch von der Breite der Leiterbahnen ab, so dass mit dieser Ausführung der Antennenspulen 6 und 7 bei ansonsten gleicher Geometrie keine exakte Kompensation der Spannungen U1 und U2 möglich ist. Aus diesem Grund werden die Antennenspulen 6 und 7 geringfügig unterschiedlich ausgebildet, so dass die Induktivitäten 10 und 12 trotz der unterschiedlichen Leiterbahnbreite exakt gleich groß sind und somit betragsmäßig die gleiche Spannung induzieren. Dies kann bei mehrlagig ausgebildeten Antennenspulen 6 und 7 beispielsweise durch eine entsprechende Verschiebung der Durchkontaktierung erreicht werden. Weiterhin können die beiden Antennenspulen 6 und 7 bezüglich ihrer Geometrie symmetrisch ausgebildet werden, damit die induzierten Spannungen U1 und U2 auch bei inhomogenen Feldern den gleichen Betrag haben.

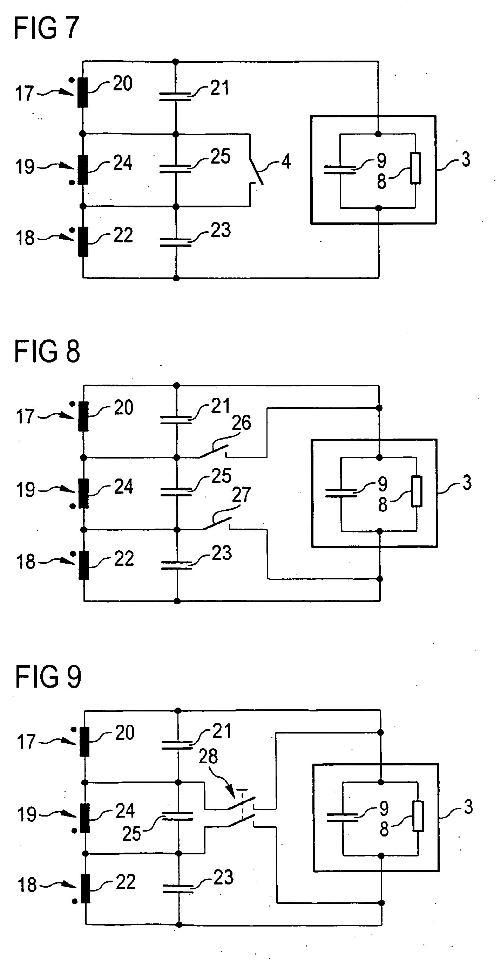

Fig. 7 zeigt ein Ersatzschaltbild eines ersten Ausführungsbeispiels der Chipkarte 1. Beim ersten Ausführungsbeispiel ist an einem Anschluss des integrierten Schaltkreises 3 eine Antennenspule 17, am anderen Anschluss des integrierten Schaltkreises 3 eine Antennenspule 18 angeschlossen. Die Antennenspulen 17 und 18 sind durch eine Antennenspule 19 miteinander verbunden, wobei die Antennenspulen 17 und 19 sowie die Antennenspulen 18 und 19 jeweils einen zueinander entgegengesetzten Wickelsinn aufweisen. Der Wickelsinn der Antennenspulen 17 und 18 ist dagegen gleich. Insgesamt ist somit am integrierten Schaltkreis 3 eine Serienschaltung der drei Antennenspulen 17,19 und 18 mit alternierendem Wickelsinn angeschlossen. Für die Antennenspulen 17,18 und 19 sind die jeweiligen Ersatzschaltbilder eingezeichnet. Dabei werden die Antennenspule 17 durch eine Parallelschaltung einer Induktivität 20 und einer Kapazität 21, die Antennenspule 18 durch eine Parallelschaltung einer Induktivität 22 und einer Kapazität 23 und die Antennenspule 19 durch eine Parallelschaltung einer Induktivität 24 und einer Kapazität 25 dargestellt. Der Antennenspule 19 ist der Taster 4 parallel geschaltet, so dass die Antennenspule 19 durch eine Betätigung des Tasters 4 kurzgeschlossen werden kann. Beim integrierten Schaltkreis 3 sind analog zum ersten Ausführungsbeispiel der Widerstand 8 und der Kondensator 9 eingezeichnet.

Die Induktivitäten 20 und 22 der Antennenspulen 17 und 18 weisen zusammen den gleichen Wert auf wie die Induktivität 24 der Antennenspule 19. Dabei können die Induktivitäten 20 und 22 untereinander gleich und jeweils halb so groß wie die Induktivität 24 sein. Alternativ dazu ist es auch möglich, dass die Induktivitäten 20 und 22 unterschiedlich sind. Beispielsweise kann die Induktivität 20 etwas kleiner als die Hälfte der Induktivität 24 sein. In diesem Fall ist die Induktivität 22 um einen entsprechenden Betrag größer als die Hälfte der Induktivität 24. In all diesen Varianten entsprechen die Antennenspulen 17 und 18 zusammen genommen der Antennenspule 6 des ersten Ausführungsbeispiels. Die Antennenspule 19 entspricht der Antennenspule 7 des Beispiels in den Fig.1 bis 6.

Wenn die Chipkarte 1 mit der in Fig. 7 dargestellten Schaltungsanordnung bei geöffnetem Taster 4 einem magnetischen Wechselfeld ausgesetzt wird, heben sich die in den Antennenspulen 17,18 und 19 induzierten Spannungen insgesamt auf, so dass am integrierten Schaltkreis 3 keine Spannung anliegt. Wird der Taster 4 geschlossen, so wird die Antennenspule 19 kurzgeschlossen und die in den Antennenspulen 17 und 18 induzierten Spannungen addieren sich. Der integrierte Schaltkreis 3 wird somit mit einer Spannung versorgt und ist betriebsbereit. Analog zum Beispiel gemäß den Fig.1 bis 6 kann der integrierte Schaltkreis 3 somit auch beim ersten Ausführungsbeispiel durch den Benutzer aktiviert und deaktiviert werden. Auch die sonstigen Ausführungen zum Beispiel gemäß den Fig.1 bis 6 gelten für das erste Ausführungsbeispiel entsprechend. Wie im folgenden beschrieben, kann das erste Ausführungsbeispiel zudem auf verschiedene Weise abgewandelt werden.

Fig. 8 zeigt ein Ersatzschaltbild für eine Abwandlung des ersten Ausführungsbeispiels der Chipkarte 1. Bei dieser Abwandlung ist der Taster 4 durch zwei Taster 26 und 27 ersetzt, wobei der Taster 26 zur Antennenspule 17 und der Taster 27 zur Antennenspule 18 parallel geschaltet ist. Bei der Abwandlung wird somit nicht die Antennenspule 19 kurzgeschlossen, sondern es werden die Antennenspulen 17 und 18 kurzgeschlossen. Ansonsten ist die Abwandlung zu der in Fig. 7 dargestellten Variante identisch. Außerdem verhält sich die Abwandlung bei geöffneten Tastern 26 und 27 identisch, wie bei Fig. 7 für den Fall des geöffneten Tasters 4 beschrieben. Dies bedeutet, dass ein magnetisches Wechselfeld in den Antennenspulen 17,18 und 19 zwar jeweils eine Spannung induziert, sich diese Spannungen aber insgesamt aufheben. Werden beide Taster 26 und 27 geschlossen, so wird nur noch in der Antennenspule 19 eine Spannung induziert, mit der der integrierte Schaltkreis 3 betrieben werden kann. Im Gegensatz zu der in Fig. 7 dargestellten Variante wird der integrierte Schaltkreis 3 somit nicht aus den Antennenspulen 17 und 18, sondern aus der Antennenspule 19 gespeist. Die am integrierten Schaltkreis 3 letztendlich anliegende Spannung ist aber in beiden Fällen gleich.

Fig. 9 zeigt ein Ersatzschaltbild für eine weitere Abwandlung des ersten Ausführungsbeispiels der Chipkarte 1. Bei dieser weiteren Abwandlung sind die beiden Taster 26 und 27 durch einen zweipoligen Taster 28 ersetzt, der im geschlossenen Zustand gleichzeitig die Antennenspule 17 und die Antennenspule 18 kurzschließt. Die sonstige Ausbildung der weiteren Abwandlung entspricht der in Fig. 8 dargestellten Abwandlung und auch die Funktionsweise ist die Gleiche.

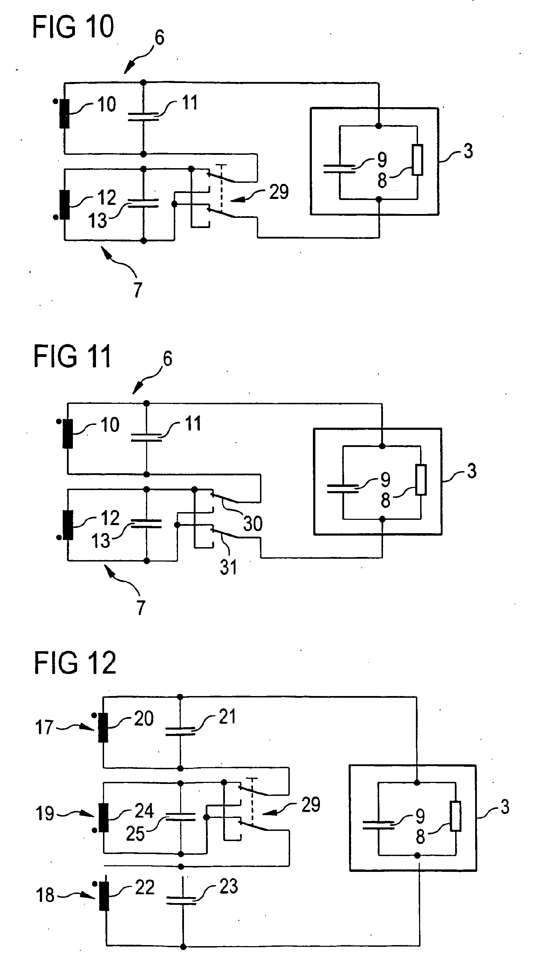

Fig. 10 zeigt ein Ersatzschaltbild eines zweiten Ausführungsbeispiels der Chipkarte 1. Ähnlich wie beim Beispiel gemäß den Fig. 1 bis 6 sind bei der in Fig. 10 dargestellten Variante des zweiten Ausführungsbeispiels die beiden Antennenspulen 6 und 7 vorgesehen, die als je eine Parallelschaltung der Induktivität 10 und der Kapazität 11 sowie der Induktivität 12 und der Kapazität 13 dargestellt sind. Ein Unterschied zum Beispiel gemäß den Fig.1 bis 6 besteht allerdings darin, dass die beiden Antennenspulen 6 und 7 nicht fest zu einer Serienschaltung miteinander verbunden sind, sondern wahlweise mit gleichem oder mit entgegengesetztem Wickelsinn in Serie geschaltet werden können. Dies wird dadurch erreicht, dass der Taster 4 des ersten Ausführungsbeispiels durch ein Polwendeschaltelement, vorzugsweise einen Polwendetaster 29 ersetzt ist. Der Polwendetaster 29 weist eine erste Schaltstellung und eine zweite Schaltstellung auf. In der dargestellten ersten Schaltstellung verbindet der Polwendetaster 29 ein Ende der Antennenspule 7 mit der Antennenspule 6 und das andere Ende der Antennenspule 7 mit dem integrierten Schaltkreis 3. Bei den in Fig. 10 dargestellten Wickelrichtungen hat das zur Folge, dass ein magnetisches Wechselfeld in den Antennenspulen 6 und 7 entgegengesetzt gleiche Spannungen induziert, die sich gegenseitig aufheben. Im Ergebnis liegt somit die gleiche Situation vor, wie in Fig. 2 dargestellt.

In der zweiten Schaltstellung verbindet der Polwendeschalter 29 verglichen mit der ersten Schaltstellung die jeweils anderen Enden der Antennenspule 7 mit der Antennenspule 6 bzw. mit dem integrierten Schaltkreis 3, d. h. die Antennenspule 7 wird mit gegenüber der ersten Schaltstellung umgekehrtem Wickelsinn angeschlossen. Die Antennenspulen 6 und 7 sind somit mit gleichem Wickelsinn in Serie geschaltet, so dass sich die darin induzierten Spannungen positiv überlagern und mit der Summenspannung der integrierte Schaltkreis 3 gespeist werden kann. Da wegen dieser positiven Überlagerung beide Antennenspulen 6 und 7 zur Betriebsspannung des integrierten Schaltkreises 3 beitragen, sind deren Windungszahlen nur halb so groß wie beim Beispiel gemäß den Fig. 1 bis 6, bei dem der integrierte Schaltkreis 3 ausschließlich von der Antennenspule 6 gespeist wird. Sonstige Grundsätze des Beispiel gemäß den Fig.1 bis 6 können aber auf das zweite Ausführungsbeispiel übertragen werden.

Fig. 11 zeigt ein Ersatzschaltbild für eine Abwandlung des zweiten Ausführungsbeispiels der Chipkarte 1. Anstelle des Polwendetasters 29 sind zwei Taster 30 und 31 mit jeweils einpoliger Umschaltfunktion vorgesehen, die so verschaltet sind, dass sie das Schaltverhalten des Polwendetasters 29 nachbilden. Ansonsten ist der Aufbau gegenüber Fig. 10 nicht verändert. Bei jeweils gemeinsam betätigten Tastern 30 und 31 ergibt sich somit die gleiche Funktionsweise wie bei Fig. 10 beschrieben.

Fig. 12 zeigt ein Ersatzschaltbild für eine Mischform zwischen dem ersten und dem zweiten Ausführungsbeispiel der Chipkarte 1. Vom ersten Ausführungsbeispiel wurde die Anordnung aus den drei Antennenspulen 17,18 und 19 übernommen. Vom zweiten Ausführungsbeispiel wurde der Polwendetaster 29 übernommen. Der Polwendetaster 29 ist so an die Antennenspulen 17,18 und 19 angeschlossen, dass die Antennenspule 19 in den beiden Schaltzuständen des Polwendetasters 29 mit jeweils vertauschten Anschlüssen zwischen die Antennenspulen 17 und 18 geschaltet wird.

So ist die Antennenspule 19 bei dem in Fig. 12 dargestellten ersten Schaltzustand des Polwendetasters 29 mit entgegengesetztem Wickelsinn zwischen die Antennenspulen 17 und 18, die jeweils untereinander den gleichen Wickelsinn aufweisen, geschaltet. Es liegt somit die gleiche Situation vor, wie bei der in Fig. 9 dargestellten Anordnung und etwaige in den Antennenspulen 17,18 und 19 induzierte Spannungen heben sich gegenseitig auf.

Im zweiten Schaltzustand des Polwendetasters 29 ist die Antennenspule 19 mit gleichem Wickelsinn zwischen die Antennenspulen 17 und 18 geschaltet. Somit überlagern sich etwaige in den Antennenspulen 17,18 und 19 induzierte Spannungen positiv und können zur Versorgung des integrierten Schaltkreises 3 herangezogen werden. Im Hinblick auf diese positive Überlagerung der Induktionsspannungen sämtlicher Antennenspulen 17,18 und 19 werden deren Induktivitäten 20, 22 und 24 kleiner dimensioniert als beim zweiten Ausführungsbeispiel, bei dem für die Spannungsversorgung des integrierten Schaltkreises 3 entweder nur die Antennenspulen 17 und 18 oder nur die Antennenspule 19 genutzt wird.

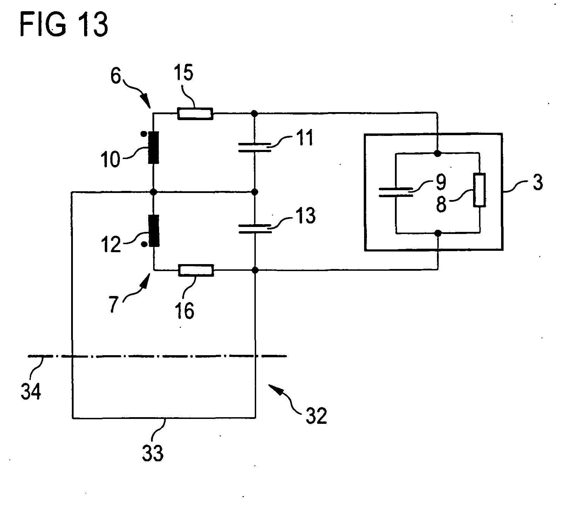

Fig. 13 zeigt ein Ersatzschaltbild zu einer Schaltungsanordnung gemäß einem dritten Ausführungsbeispiel. Die Schaltungsanordnung entspricht prinzipiell der gemäß dem Ausführungsbeispiel nach Fig. 4, jedoch mit dem Unterschied, dass die der Antennenanordnung 7 parallelgeschaltete Schalteinrichtung nicht durch einen Taster 4 sondern durch einen abtrennbaren Teil 32 realisiert ist. Durch Abtrennen des Teils 32 wird ein Leitungsstück 33 entlang einer vorgegebenen Trennlinie 34 aus der Schaltung herausgelöst. Dadurch wird der die Antenneneinrichtung 7 kurzschließende Leitungsteil dauerhaft unterbrochen. Die einander entgegenwirkenden Antenneneinrichtungen 6 und 7 sind dann irreversibel in Reihe geschaltet, wobei sich ihre Beiträge zur Wirkung der gesamten Antennenanordnung idealerweise kompensieren. Die Antennenanordnung wird dadurch unbrauchbar. Eine Schaltungsanordnung gemäß dem Ersatzschaltbild des dritten Ausführungsbeispiels nach Fig. 13 eignet sich daher insbesondere zum Unbrauchbarmachen des mit der Schaltungsanordnung ausgestatteten Datenträgers oder zumindest zum irreversiblen Deaktivieren seiner Antennenanordnung.

Eine entsprechende Funktionalität lässt sich auch mit der Schaltungsanordnung gemäß Fig. 4 erzielen, wenn bei der dortigen Schaltungsanordnung der Schalter 4 normalerweise geschlossen ist (kurzgeschlossene Antenneneinrichtung 7) und durch einmalige, irreversible Betätigung des Schalters 4 geöffnet wird (Reihenschaltung der beiden Antenneneinrichtungen 6 und 7).

Statt die Antennenanordnung dauerhaft zu deaktivieren, kann sie in entsprechender Weise auch dauerhaft aktiviert werden, beispielsweise zur Freischaltung der Schaltungsanordnung. In Bezug auf die Schaltungsanordnung nach Fig. 4 kann dies so realisiert sein, dass der Schalter 4 zunächst offen ist (deaktivierter Zustand mit in Reihe geschalteten Antenneneinrichtungen 6 und 7) und durch einmaliges, irreversibles Betätigen geschlossen wird (aktiver Zustand mit kurzgeschlossener Antenneneinrichtung 7).

Auch das dritte Ausführungsbeispiel gemäß Fig. 13 lässt sich in entsprechender Weise für eine dauerhafte Aktivierung abwandeln (nicht dargestellt). Anstatt den abtrennbaren Teil 32 der Antenneneinrichtung 7 parallelzuschalten, kann er zur irreversiblen Unterbrechung einer der beiden Antenneneinrichtungen 6 oder 7, beispielsweise innerhalb der Spulen 10 bzw. 12, vorgesehen sein. Dass die Widerstände 15 und 16 in den jeweiligen Antenneneinrichtungen 6 bzw. 7 unterschiedlich sind, hat für diese Ausführungsvariante dann keinerlei Bedeutung.

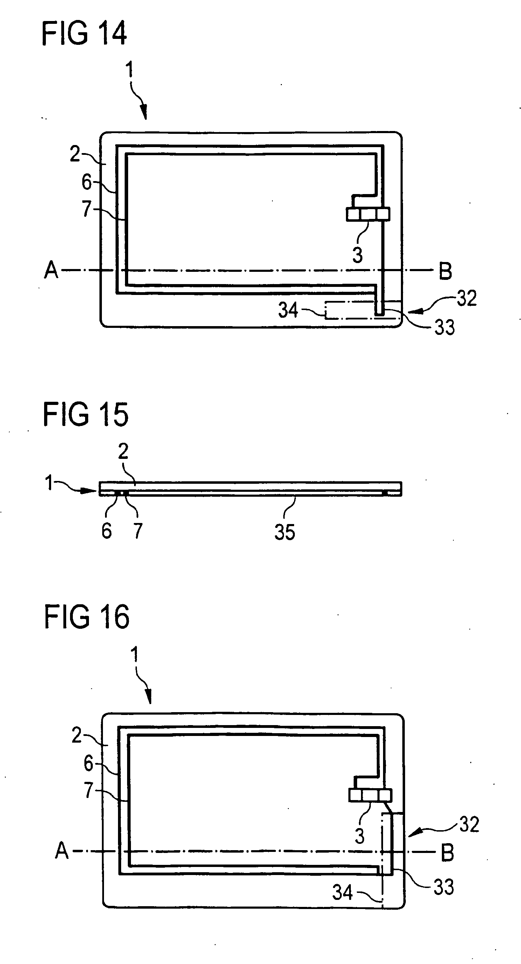

Fig. 14 und 15 zeigen in Draufsicht und im Querschnitt eine Möglichkeit der Realisierung eines Datenträgers mit einer Schaltungsanordnung gemäß dem dritten Ausführungsbeispiel nach Fig. 13. Bei dem Datenträger 1 kann es sich wieder um eine Chipkarte oder insbesondere beispielsweise um einen Visa-Sticker für Personalausweise handeln. Er besteht im Ausführungsbeispiel aus einem Trägersubstrat 2, z. B. aus Papier oder Kunststoff, einem Chipmodul mit integriertem Schaltkreis 3 und Anschlüssen für zwei Antennenspulen 6 und 7. Der Dämpfungswiderstand 16a kann im Chipmodul angeordnet sein und einer der Anschlüsse des Dämpfungswiderstand 16a kann über eine zusätzliche dritte Kontaktfläche herausgeführt werden. Alternativ kann der Dämpfungswiderstand 16a auch im Taster 4 aufgenommen sein.

Auf der Rückseite des Datenträgers 1 kann sich zusätzlich eine Kleberschicht 35 befinden, mittels welcher der Datenträger auf eine andere Oberfläche aufgeklebt werden kann, beispielsweise als eVisum auf eine Passbuchseite. Die Antennenspulen 6, 7 besitzen hier jeweils nur eine Antennenwindung, die im gegensinnigen Wicklungssinn auf dem Trägersubstrat 2 aufgebracht sind. Die Antennenspule 7 ist über ein Leitungsstück 33 unter Umgehung der Antennenspule 6 direkt mit dem zweiten Anschluss des Chipmoduls 3 verbunden. Der Widerstand der Antennenspule 6 ist im Vergleich zum Widerstand des Leistungsstücks 33 groß, so dass ein induzierter Strom durch die Antennenspule 7 und das Leitungsstück 33 von dem einen Antennenanschluss zu dem anderen Antennenanschluss des Chipmoduls 3 fließt. Dadurch ist die Antennenspule 6 kurzgeschlossen. Das Leitungsstück 33 verläuft über oder in einem vom Datenträger 1 abtrennbaren Teil 32. Das die Antennenspule 6 kurzschließende Leitungsstück 33 kann somit mit dem abtrennbaren Teil 32 vom Datenträger 1 entfernt werden, so dass beide Spulen 6 und 7 aktiv werden, sich in ihrer Wirkung jedoch aufgrund ihrer gegensinnigen Wicklungsrichtung kompensieren. Der Datenträger 1 lässt sich auf diese Weise dauerhaft deaktivieren.

Um zu erreichen, dass beim Heraustrennen des Teils 32 nur das gewünschte Leitungsstück 33 aus der Schaltungsanordnung entfernt wird, ist eine Trennlinie 34 zumindest teilweise vorgegeben. Die Trennlinie 34 kann auch vollständig durchtrennt sein, wobei dann der abtrennbare Teil 32 innerhalb des Datenträgers 31 durch angrenzende Schichten, beispielsweise die Kleberschicht 35, gehalten wird. Im Ausführungsbeispiel ist die Trennlinie 34 aber als Sollbruchlinie ausgebildet und kann Perforationen und/oder Wandstärkenreduzierungen umfassen. Beide Sollbruchtypen lassen sich vorteilhaft durch Stanzen herstellen. Besonders geeignet ist dazu das sogenannte Kiss-Cutting, welches auch als berührungsloses Stanzen bezeichnet wird. Kiss-Cutting-Stanzautomaten sind in der Lage, feinste Materialstärken von unter 1/10 mm Stärke zu stanzen, anzustanzen oder zu perforieren und werden bei Visa-Stickern bereits dazu eingesetzt, dass ein eingeklebter Sticker bei dem Versuch, ihn von dem mittels des Stickers gesicherten Gegenstand abzulösen, in kleine Einzelstücke zerreißt.

Fig. 16 zeigt eine alternative Anordnung des aus dem Datenträger heraustrennbaren Teils 32, des damit herauszulösenden Leitungsstücks 33 und der entsprechenden Trennlinie 34. Während sich die Ausführungsform gemäß Fig. 14 besonders für folienartige Datenträger eignet, wie z. B. Visa-Sticker, bei denen der heraustrennbare Teil 32 z. B. als abtrennbares Folienstück ausgebildet ist, eignet sich die Variante gemäß Fig. 16 für Datenträger mit größerer Materialstärke, beispielsweise Chipkarten, aus denen eine Ecke herausgebrochen werden kann.

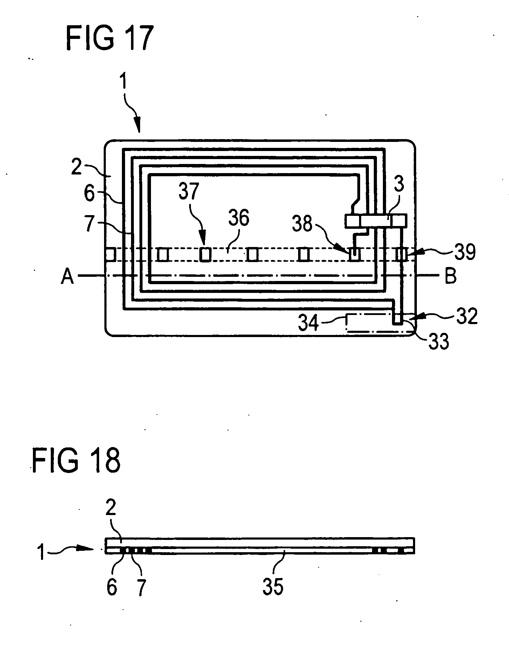

Fig.17 und 18 zeigen schematisch in Draufsicht und im Querschnitt eine Weiterbildung des vierten Ausführungsbeispiels gemäß Fig. 14 und 15, von dem sie sich dadurch unterscheidet, dass die beiden Antennenspulen 6, 7 jeweils mehrere Windungen haben, konkret jeweils zwei Windungen, und dass in den Körper 2 des Datenträgers 1 ein Sicherheitsfaden oder -band 36 mit elektrischer Leitfähigkeit als sogenannter Fensterfaden mit Fenstern 37 integriert ist. Fensterfäden lassen sich in unterschiedlichsten Substratmaterialien integrieren. Die DE 10111848 A1 offenbart Fensterfäden für die Einlagerung in Blattgut, wie Dokumente, Wertpapiere und Banknoten, und die DE 101 34 817 A1 gibt Möglichkeiten an, wie Sicherheitsfäden als beidseitige Fensterfäden in kartenförmige Datenträger, insbesondere Kunststoffkarten wie Chipkarten und dergleichen, integriert werden können. Beidseitige Fensterfäden treten im Gegensatz zu einseitigen Fensterfäden an beiden Seiten des Substrats, in dem sie eingelagert sind, an die Substratoberfläche.

Ein Teilstück der Antennenspule 6 wird hier durch den Fensterfaden 4 gebildet, so dass der als Sicherheitsmerkmal dienende Fensterfaden gleichzeitig eine weitere Funktionalität erfüllt. Dadurch wird der Schutz des Datenträgers gegen Fälschung, z.B. das Nachahmen des Fadens durch einen Aufdruck, erhöht.

Desweiteren dient der Sicherheitsfaden als Leitungsbrücke zur Überbrückung der Windungen der Antennenspulen 6 und 7. Dazu ist ein Ende der Antennenspule 6 an die elektrisch leitende Oberfläche des Sicherheitsfadens 36, der typischerweise ein metallisch beschichteter Kunststofffaden sein kann, in einem ersten Fenster 38 angeschlossen, und der Sicherheitsfaden 36 ist in einem zweiten Fenster 39 mit dem Leitungsstück 33 gekoppelt. Die zu überbrückenden Windungen liegen zwischen diesen beiden Fenstern 38,39. Die rückgeführten Windungen sind entsprechend zwischen zwei anderen der Fenster 37 verlegt.

Die beschriebenen Ausführungsbeispiele können auch in anderer Weise abgewandelt oder kombiniert werden.

## Patentansprüche

1. Tragbarer Datenträger mit einer elektronischen Schaltung (3) zur Speicherung und/ oder Verarbeitung von Daten und einer Antennenanordnung (5) mit mehreren Antenneneinrichtungen (6, 7; 17, 18, 19) zur kontaktlosen Energie- und/oder Datenübertragung, wobei der Beitrag wenigstens einer der Antenneneinrichtungen (6, 7; 17, 18, 19) zur Wirkung der Antennenanordnung (5) mittels einer Schalteinrichtung (4; 26, 27; 28; 29; 30, 31; 32) variierbar ist und zumindest in einem Schaltzustand mindestens zwei der Antenneneinrichtungen (6, 7; 17, 18,19) bezogen auf die elektronische Schaltung (3) in Serie geschaltet und ihre Beiträge zur Wirkung der Antennenanordnung (5) einander entgegengesetzt sind, **dadurch gekennzeichnet, dass** der Beitrag wenigstens einer der Antenneneinrichtungen (6, 7; 17, 18, 19) zur Wirkung der Antennenanordnung (5) so variierbar ist, dass sich die Beiträge der Antenneneinrichtungen (6, 7; 17,18,19) kompensieren und dass der Beitrag wenigstens einer der Antenneneinrichtungen (6, 7; 17, 18,19) zur Wirkung der Antennenanordnung (5) so variierbar ist, dass sich die Beiträge der Antenneneinrichtungen (6, 7; 17, 18, 19) verstärkend überlagern.

2. Tragbarer Datenträger nach Anspruch 1, **dadurch gekennzeichnet, dass** der Beitrag wenigstens einer der Antenneneinrichtungen (6, 7; 17, 18,19) zur Wirkung der Antennenanordnung (5) reduzierbar ist.

3. Tragbarer Datenträger nach einem der vorhergehenden Ansprüche, **dadurch gekennzeichnet, dass** wenigstens eine der Antenneneinrichtungen (6, 7;17,18,19) kurzschließbar ist.

4. Tragbarer Datenträger nach einem der vorhergehenden Ansprüche, **dadurch gekennzeichnet, dass** die Anschlüsse wenigstens einer der Antenneneinrichtungen (6, 7; 17, 18, 19) vertauschbar sind.

5. Tragbarer Datenträger nach einem der vorhergehenden Ansprüche, **dadurch gekennzeichnet, dass** wenigstens zwei der Antenneneinrichtungen (6, 7; 17, 18, 19) gleiche Induktivitätswerte aufweisen.

6. Tragbarer Datenträger nach einem der vorhergehenden Ansprüche, **dadurch gekennzeichnet, dass** wenigstens zwei der Antenneneinrichtungen (6, 7; 17,18,19) unterschiedliche Induktivitätswerte aufweisen.

7. Tragbarer Datenträger nach einem der vorhergehenden Ansprüche, **dadurch gekennzeichnet, dass** wenigstens zwei der Antenneneinrichtungen (6, 7; 17,18,19) eine unterschiedliche Dämpfung aufweisen.

8. Tragbarer Datenträger nach einem der vorhergehenden Ansprüche, **dadurch gekennzeichnet, dass** wenigstens eine der Antenneneinrichtungen (6, 7; 17, 18, 19) einen Dämpfungswiderstand aufweist.

9. Tragbarer Datenträger nach Anspruch 8, **dadurch gekennzeichnet, dass** der Dämpfungswiderstand als zusätzliches Bauteil ausgebildet ist.

10. Tragbarer Datenträger nach Anspruch 8, **dadurch gekennzeichnet, dass** der Dämpfungswiderstand durch den ohmschen Widerstand einer der Antenneneinrichtungen (6, 7; 17, 18, 19) gebildet wird.

11. Tragbarer Datenträger nach Anspruch 10, **dadurch gekennzeichnet, dass** wenigstens zwei der Antenneneinrichtungen (6, 7;17,18,19) in ihren Abmessungen unterschiedlich dimensioniert sind.

12. Tragbarer Datenträger nach einem der vorhergehenden Ansprüche, **dadurch gekennzeichnet, dass** wenigstens zwei der Antenneneinrichtungen (6, 7; 17, 18, 19) aus elektrisch unterschiedlich leitfähigem Material bestehen.

13. Tragbarer Datenträger nach einem der vorhergehenden Ansprüche, **dadurch gekennzeichnet, dass** die Antennenanordnung (5) wenigstens drei Antenneneinrichtungen (17, 18, 19) aufweist.

14. Tragbarer Datenträger nach einem der vorhergehenden Ansprüche, **dadurch gekennzeichnet, dass** die Schalteinrichtung (4; 26, 27; 28; 29; 30,31; 32) wenigstens einer der Antenneneinrichtungen (6, 7; 17, 18, 19) parallel geschaltet ist.

15. Tragbarer Datenträger nach einem der vorhergehenden Ansprüche, **dadurch gekennzeichnet, dass** die Schalteinrichtung (4; 26, 27; 28; 29; 30, 31; 32) irreversibel betätigbar ist.

16. Tragbarer Datenträger nach einem der vorhergehenden Ansprüche, **dadurch gekennzeichnet, dass** die Schalteinrichtung (4; 26, 27; 28; 29; 30, 31) als ein Taster ausgebildet ist.

17. Tragbarer Datenträger nach einem der vorhergehenden Ansprüche, **dadurch gekennzeichnet, dass** die Schalteinrichtung (4; 26, 27; 28) in Ruhestellung geöffnet ist.

18. Tragbarer Datenträger nach einem der Ansprüche 1 bis 17, **dadurch gekennzeichnet, dass** die Schalteinrichtung als ein Polwendetaster (29) ausgebildet ist oder die Funktion eines Polwendetasters durch mehrere Schalteinrichtungen (30,31) nachbildet.

19. Tragbarer Datenträger nach Anspruch 15, **dadurch gekennzeichnet, dass** die Schalteinrichtung einen von dem Datenträger trennbaren Teil (32) umfasst.

20. Tragbarer Datenträger nach Anspruch 19, **dadurch gekennzeichnet, dass** der von dem Datenträger trennbare Teil (32) zumindest teilweise durch eine Trennlinie (34) vorgegeben ist.

21. Tragbarer Datenträger nach Anspruch 20, **dadurch gekennzeichnet, dass** die Trennlinie (34) eine Sollbruchlinie umfasst.

22. Tragbarer Datenträger nach Anspruch 21, **dadurch gekennzeichnet, dass** die Sollbruchlinie (34) zumindest in Teilbereichen als Wandstärkenreduzierung realisiert ist.

23. Datenträger nach Anspruch 22, **dadurch gekennzeichnet, dass** die Teilbereiche reduzierter Wandstärke gestanzt sind.

24. Tragbarer Datenträger nach einem der vorhergehenden Ansprüche, **dadurch gekennzeichnet, dass** wenigstens eine der Antenneneinrichtungen (6, 7; 17,18,19) als eine Antennenspule ausgebildet ist.

25. Tragbarer Datenträger nach einem der vorhergehenden Ansprüche, **dadurch gekennzeichnet, dass** wenigstens zwei der Antenneneinrichtungen (6, 7; 17, 18, 19) als Antennenspulen ausgebildet sind, die wenigstens zeitweise mit einem entgegengesetzten Wickelsinn in Serie geschaltet sind.

26. Tragbarer Datenträger nach einem der vorhergehenden Ansprüche, **dadurch gekennzeichnet, dass** ein Stück von einer der Antenneneinrichtungen (6) durch einen Sicherheitsfaden (36) gebildet wird.

27. Tragbarer Datenträger nach einem der vorhergehenden Ansprüche, **dadurch gekennzeichnet, dass** er als eine Chipkarte ausgebildet ist.

28. Tragbarer Datenträger nach einem der Ansprüche 1 bis 26, **dadurch gekennzeichnet, dass** er als Visa-Sticker ausgebildet ist.

29. Verfahren zum Betreiben eines tragbaren Datenträgers (1),
nach einem der vorhergehenden Ansprüche
, **dadurch gekennzeichnet, dass** zumindest in einem Schaltzustand mindestens zwei der Antenneneinrichtungen (6,7; 17, 18,19) bezogen auf die elektronische Schaltung (3) in Serie geschaltet und ihre Beiträge zur Wirkung der Antennenanordnung (5) einander entgegengesetzt sind und der tragbare Datenträger dadurch zwischen einem Zustand, in dem eine Energie- und/oder Datenübertragung über die Antennenanordnung durchgeführt wird und einem Zustand, in dem keine Energie- und/oder Datenübertragung über die Antennenanordnung durchgeführt wird, überführt wird.

## Claims

1. A portable data carrier with an electronic circuit (3) for storing and/ or processing data and an antenna arrangement (5) with several antenna units (6, 7; 17, 18, 19) for contactless energy transmission and/ or data transmission, wherein the contribution of at least one of the antenna units (6, 7; 17, 18, 19) to the effect of the antenna arrangement (5) is variable by means of a switching unit (4; 26, 27; 28; 29; 30, 31; 32) and at least in one switching state there are series-connected at least two of the antenna units (6, 7; 17, 18, 19) with reference to the electronic circuit (3), and their contributions to the effect of the antenna arrangement (5) are mutually opposing, **characterized in that** the contribution of at least one of the antenna units (6, 7; 17, 18, 19) to the effect of the antenna arrangement (5) is variable such that the contributions of the antenna units (6, 7; 17, 18, 19) compensate each other and that the contribution of at least one of the antenna units (6, 7; 17, 18, 19) to the effect of the antenna arrangement (5) is variable such that the contributions of the antenna units (6, 7; 17, 18, 19) overlay each other in an amplifying fashion.

2. The portable data carrier according to claim 1, **characterized in that** the contribution of at least one of the antenna units (6, 7; 17, 18, 19) to the effect of the antenna arrangement (5) is reducible.

3. The portable data carrier according to any of the preceding claims, **characterized in that** at least one of the antenna units (6, 7; 17, 18, 19) can be short-circuited.

4. The portable data carrier according to any of the preceding claims, **characterized in that** the connections of at least one of the antenna units (6, 7; 17, 18, 19) are exchangeable.

5. The portable data carrier according to any of the preceding claims, **characterized in that** at least two of the antenna units (6, 7; 17, 18, 19) have the same inductance values.

6. The portable data carrier according to any of the preceding claims, **characterized in that** at least two of the antenna units (6, 7; 17, 18, 19) have different inductance values.

7. The portable data carrier according to any of the preceding claims, **characterized in that** at least two of the antenna units (6, 7; 17, 18, 19) have different damping.

8. The portable data carrier according to any of the preceding claims, **characterized in that** at least one of the antenna units (6, 7; 17, 18, 19) has a damping resistor.

9. The portable data carrier according to claim 8, **characterized in that** the damping resistor is configured as an additional component.

10. The portable data carrier according to claim 8, **characterized in that** the damping resistor is formed by the Ohmic resistance of one of the antenna units (6, 7; 17, 18, 19).

11. The portable data carrier according to claim 10, **characterized in that** at least two of the antenna units (6, 7; 17, 18, 19) are dimensioned differently regarding their dimensions.

12. The portable data carrier according to any of the preceding claims, **characterized in that** at least two of the antenna units (6, 7; 17, 18, 19) consist of a material with different electrical conductivity.

13. The portable data carrier according to any of the preceding claims, **characterized in that** the antenna arrangement (5) has at least three antenna units (17, 18, 19).

14. The portable data carrier according to any of the preceding claims, **characterized in that** the switching unit (4; 26, 27; 28; 29; 30, 31; 32) is connected in parallel to at least one of the antenna units (6, 7; 17, 18, 19).

15. The portable data carrier according to any of the preceding claims, **characterized in that** the switching unit (4; 26, 27; 28; 29; 30, 31; 32) is operable irreversibly.

16. The portable data carrier according to any of the preceding claims, **characterized in that** the switching unit (4; 26, 27; 28; 29; 30, 31) is configured as a push-button.

17. The portable data carrier according to any of the preceding claims, **characterized in that** the switching unit (4; 26, 27; 28) is open in an inoperative position.

18. The portable data carrier according to any of the claims 1 to 17, **characterized in that** the switching unit is configured as a pole-reversing push-button (29) or reproduces the function of a pole-reversing push-button through several switching units (30, 31).

19. The portable data carrier according to claim 15, **characterized in that** the switching unit comprises a part (32) that is separable from the data carrier.

20. The portable data carrier according to claim 19, **characterized in that** the part (32) that is separable from the data carrier is predetermined at least partly by a separating line (34).

21. The portable data carrier according to claim 20, **characterized in that** the separating line (34) comprises a rated breaking line.

22. The portable data carrier according to claim 21, **characterized in that** the rated breaking line (34) is realized as a reduction of wall strength at least in partial regions.

23. The portable data carrier according to claim 22, **characterized in that** the partial regions of reduced wall strength are punched.

24. The portable data carrier according to any of the preceding claims, **characterized in that** at least one of the antenna units (6, 7; 17, 18, 19) is configured as an antenna coil.

25. The portable data carrier according to any of the preceding claims, **characterized in that** at least two of the antenna units (6, 7; 17, 18, 19) are configured as antenna coils that are series-connected at least temporarily with an opposite winding direction.

26. The portable data carrier according to any of the preceding claims, **characterized in that** a portion of one of the antenna units (6) is formed by a security thread (36).

27. The portable data carrier according to any of the preceding claims, **characterized in that** it is configured as a chip card.

28. The portable data carrier according to any of the claims 1 to 26, **characterized in that** it is configured as a visa sticker.

29. A method for operating a portable data carrier (1) according to any of the preceding claims, **characterized in that** in one switching state there are series-connected at least two of the antenna units (6, 7; 17, 18, 19) with reference to the electronic circuit (3) and their contributions to the effect of the antenna arrangement (5) are mutually opposing, and the portable data carrier is thereby converted between a state in which an energy transmission and/ or data transmission is carried out via the antenna arrangement and a state in which no energy transmission and/ or data transmission is carried out via the antenna arrangement.

## Revendications

1. Support de données portable comprenant un circuit électronique (3) pour la mémorisation et/ou le traitement de données et un agencement d'antennes (5) comportant plusieurs dispositifs d'antennes (6, 7; 17, 18, 19) pour la transmission d'énergie et/ou de données sans contact, la contribution d'au moins un des dispositifs d'antennes (6, 7; 17, 18, 19) à l'effet de l'agencement d'antennes (5) pouvant être amenée à varier au moyen d'un dispositif de commutation (4; 26, 27; 28; 29; 30, 31; 32) et, au moins dans un état de commutation, au moins deux des dispositifs d'antennes (6, 7; 17, 18, 19) étant branchés en série par rapport au circuit électronique (3) et leurs contributions à l'effet de l'agencement d'antennes (5) étant opposées les unes aux autres, **caractérisé en ce que** la contribution d'au moins un des dispositifs d'antennes (6, 7; 17, 18, 19) à l'effet de l'agencement d'antennes (5) peut être amenée de telle sorte à varier que les contributions des dispositifs d'antennes (6, 7; 17, 18, 19) se compensent et que la contribution d'au moins un des dispositifs d'antennes (6, 7; 17, 18, 19) à l'effet de l'agencement d'antennes (5) peut être amenée de telle sorte à varier que les contributions des dispositifs d'antennes (6, 7; 17, 18, 19) se superposent en se renforçant.

2. Support de données portable selon la revendication 1, **caractérisé en ce que** la contribution d'au moins un des dispositifs d'antennes (6, 7; 17, 18, 19) à l'effet de l'agencement d'antennes (5) est réductible.

3. Support de données portable selon une des revendications précédentes, **caractérisé en ce qu'**au moins un des dispositifs d'antennes (6, 7; 17, 18, 19) est court-circuitable.

4. Support de données portable selon une des revendications précédentes, **caractérisé en ce que** les bornes d'au moins un des dispositifs d'antennes (6, 7; 17, 18, 19) sont permutables.

5. Support de données portable selon une des revendications précédentes, **caractérisé en ce qu'**au moins deux des dispositifs d'antennes (6, 7; 17, 18, 19) présentent des valeurs d'inductance égales.

6. Support de données portable selon une des revendications précédentes, **caractérisé en ce qu'**au moins deux des dispositifs d'antennes (6, 7; 17, 18, 19) présentent des valeurs d'inductance différentes.

7. Support de données portable selon une des revendications précédentes, **caractérisé en ce qu'**au moins deux des dispositifs d'antennes (6, 7; 17, 18, 19) présentent un affaiblissement différent.

8. Support de données portable selon une des revendications précédentes, **caractérisé en ce qu'**au moins un des dispositifs d'antennes (6, 7; 17, 18, 19) présente une résistance d'affaiblissement.

9. Support de données portable selon la revendication 8, **caractérisé en ce que** la résistance d'affaiblissement est réalisée sous forme de composant supplémentaire.

10. Support de données portable selon la revendication 8, **caractérisé en ce que** la résistance d'affaiblissement est généré par la résistance ohmique d'un des dispositifs d'antennes (6, 7; 17, 18, 19).

11. Support de données portable selon la revendication 10, **caractérisé en ce qu'**au moins deux des dispositifs d'antennes (6, 7; 17, 18, 19) présentent des dimensions différentes.

12. Support de données portable selon une des revendications précédentes, **caractérisé en ce qu'**au moins deux des dispositifs d'antennes (6, 7; 17, 18, 19) se composent de matériau à conductivité électrique différente.

13. Support de données portable selon une des revendications précédentes, **caractérisé en ce que** l'agencement d'antennes (5) comporte au moins trois dispositifs d'antennes (17, 18, 19).

14. Support de données portable selon une des revendications précédentes, **caractérisé en ce que** le dispositif de commutation (4; 26, 27; 28; 29; 30, 31; 32) est branché en parallèle à au moins un des dispositifs d'antennes (6, 7; 17, 18, 19).

15. Support de données portable selon une des revendications précédentes, **caractérisé en ce que** le dispositif de commutation (4; 26, 27; 28; 29; 30, 31; 32) est irréversiblement actionnable.

16. Support de données portable selon une des revendications précédentes, **caractérisé en ce que** le dispositif de commutation (4; 26, 27; 28; 29; 30, 31) est réalisé sous forme de palpeur.

17. Support de données portable selon une des revendications précédentes, **caractérisé en ce que** le dispositif de commutation (4; 26, 27; 28) est ouvert en position de repos.

18. Support de données portable selon une des revendications de 1 à 17, **caractérisé en ce que** le dispositif de commutation est réalisé sous forme d'un palpeur inverseur de pôle (29) ou reproduit la fonction d'un palpeur inverseur de pôle par l'intermédiaire de plusieurs dispositifs de commutation (30, 31).

19. Support de données portable selon la revendication 15, **caractérisé en ce que** le dispositif de commutation comprend une partie (32) séparable du support de données.

20. Support de données portable selon la revendication 19, **caractérisé en ce que** la partie (32) séparable du support de données est prédéterminée au moins partiellement par une ligne de séparation (34).

21. Support de données portable selon la revendication 20, **caractérisé en ce que** la ligne de séparation (34) comprend une ligne de rupture privilégiée.

22. Support de données portable selon la revendication 21, **caractérisé en ce que** la ligne de rupture privilégiée (34) est réalisée, au moins dans des zones partielles, en tant que réduction de l'épaisseur de paroi.

23. Support de données selon la revendication 22, **caractérisé en ce que** les zones partielles d'épaisseur de paroi réduite sont découpées.

24. Support de données portable selon une des revendications précédentes, **caractérisé en ce qu'**au moins un des dispositifs d'antennes (6, 7; 17, 18, 19) est réalisé sous forme d'une bobine d'antenne.

25. Support de données portable selon une des revendications précédentes, **caractérisé en ce qu'**au moins deux des dispositifs d'antennes (6, 7; 17, 18, 19) sont réalisés sous forme de bobines d'antennes qui sont, au moins par moments, branchées en série avec un sens d'enroulement opposé.

26. Support de données portable selon une des revendications précédentes, **caractérisé en ce qu'**un morceau d'un des dispositifs d'antennes (6) est constitué par un fil de sécurité (36).

27. Support de données portable selon une des revendications précédentes, **caractérisé en ce qu'**il est réalisé sous forme d'une carte à puce.

28. Support de données portable selon une des revendications de 1 à 26, **caractérisé en ce qu'**il est réalisé sous forme de vignette-visa.

29. Procédé d'exploitation d'un support de données portable (1) selon une des revendications précédentes, **caractérisé en ce que**, au moins dans un état de commutation, au moins deux des dispositifs d'antennes (6, 7; 17, 18, 19) sont branchés en série par rapport au circuit électronique (3) et leurs contributions à l'effet de l'agencement d'antennes (5) sont opposées les unes aux autres et le support de données portable se trouve porté entre un état dans lequel une transmission d'énergie et/ou de données est exécutée par l'intermédiaire de l'agencement d'antennes et un état dans lequel nulle transmission d'énergie et/ou de données n'est exécutée par l'intermédiaire de l'agencement d'antennes.
